# EUROPÄISCHE PATENTSCHRIFT

(11) **EP 1 243 860 B1**
(45) Veröffentlichungstag und Bekanntmachung des Hinweises auf die Patenterteilung: **13.10.2004**
(21) Anmeldenummer: 01107348.3
(22) Anmeldetag: 24.03.2001
(51) Int. Cl.: F24D 3/16

(54) **Vorrichtung zur Wärmeübertragung**
Device for heat transfer
Dispositif pour transfer de chaleur

(43) Veröffentlichungstag der Anmeldung: 25.09.2002
(73) Patentinhaber: Mair, Gottfried, 94474 Vilshofen (DE)
(72) Erfinder: Mair, Gottfried, 94474 Vilshofen (DE)
(74) Vertreter: Gustorf, Gerhard, Dipl.-Ing.

(56) Entgegenhaltungen:
- CA-A- 1 150 722
- DE-A- 2 702 337
- DE-A- 19 619 912
- DE-U- 8 110 760

## Beschreibung

Die Erfindung betrifft eine Vorrichtung zur Wärmeübertragung mit wenigstens einer von einem Heiz- oder Kühlmedium durchströmten Rohrleitung nach dem Oberbegriff des Patentanspruchs 1.

Zum Heizen von Räumen ist es bekannt, am Fußboden oder an den Wänden, gelegentlich auch an der Decke, Rohrleitungen zu verlegen, die von Warmwasser oder Dampf durchströmt werden. Um die Rohrleitungen beispielsweise an der Wand anzubringen, müssen zuvor Schienen verlegt werden, um die Rohrleitungen befestigen zu können. Dieses Verfahren ist verhältnismäßig aufwendig, zeitraubend und damit teuer. Hinzu kommt, daß die Schienen und die daran befestigten Rohrleitungen sehr viel Platz beanspruchen, so daß die anschließend aufzutragende Putzschicht sehr stark sein muß.

Eine Vorrichtung der im Oberbegriff des Patentanspruchs 1 angegebenen Bauart ist aus der DE-U 81 10 760 bekannt. Dabei ist das Tragelement als U-förmiger Container ausgebildet, in dessen Innenraum die schlangenförmigen Schlauchleitungen verlegt sind. Einander benachbarte Container sind nur über die Schlauchleitungen miteinander verbunden.

Gegenstand der DE-A 196 19 912 ist eine Warmwasser-Fußbodenheizung, bei der zwei unmittelbar nebeneinander verlegte Rohrschleifen auf einer Trägermatte angebracht sind und gegenläufig von dem Wärmemedium durchströmt werden. Am Wendepunkt vor einer Wand muß die Trägermatte aufgetrennt und in einer neuen Bahn zurück ausgelegt werden.

Aus der CA-A 1 150 722 ist eine Fußbodenheizung bekannt, die aus steifen Flachträgern zusammengesetzt ist, auf denen schlangenförmig verlegte Rohre befestigt sind. Die Verbindung zwischen nebeneinander liegenden Flachträgern erfolgt dadurch, daß nur die jeweiligen Rohrenden aneinander angeschlossen werden.

Der Erfindung liegt die Aufgabe zugrunde, eine Vorrichtung zur Wärmeübertragung mit einer Rohrleitung zur Verfügung zu stellen, die von einem Heizmedium oder auch von einem Kühlmedium durchströmt wird, bei der die oben erläuterten Nachteile vermieden sind. Insbesondere soll eine Vorrichtung geschaffen werden, welche einfach und kostengünstig montiert werden kann und nur eine geringe Stärke aufweist.

Gemäß der Erfindung wird diese Aufgabe durch die im Kennzeichen des Patentanspruchs 1 angegebenen Merkmale gelöst.

Derartige Tragelemente können bereits beim Hersteller als eine Verkaufseinheit produziert werden, die vom Anwender vor Ort nur noch an der Gebäudewand, am Boden oder an der Decke fixiert werden muß. Daneben besteht die Möglichkeit, die Montageeinheit in der Bausubstanz zu integrieren, beispielsweise in eine Wand oder im Betonboden vor Ort einzugießen. Alternativ können die Trageinheiten auch bereits beim Hersteller in vorgefertigte Bauelemente für Wände, Böden oder Decken eingegossen werden.

Bei der Erfindung sind mehrere Tragelemente über Gelenke harmonika- oder leporelloartig miteinander verbunden. Dabei ist es günstig, wenn sich die Rohrleitung als ein zusammenhängendes Register über mehrere Tragelemente erstreckt. Die Tragelemente können nach der Herstellung zu handlichen Paketen zusammengefaltet und in dieser Form im Handel bereit gehalten werden.

In Weiterbildung dieses Gedankens ist es besonders vorteilhaft, wenn im Bereich der durch die Gelenke miteinander verbundenen, parallelen Außenkanten zweier Tragelemente ein längs dieser Außenkanten verlaufender Abschnitt der Rohrleitung angeordnet ist. Damit wird erreicht, daß der genannte Abschnitt der Rohrleitung wie ein Scharnier wirkt und beim Zusammenfalten der beiden Tragelemente über seine Länge tordiert wird.

Von besonderem Vorteil ist es, wenn die plattenförmigen Tragelemente aus Gittermatten bestehen. An diesen können die Rohrleitungen sehr einfach befestigt werden, beispielsweise mittels Schlauchbindern. Wesentlich ist dabei, daß die Gittermatten einfach herzustellen sind und ein äußerst geringes Gewicht aufweisen.

In Weiterbildung der Erfindung hat jede Gittermatte im Bereich von zwei zueinander parallelen Außenkanten jeweils einen zur Außenkante parallelen Doppelsteg für die Aufnahme von Befestigungselementen. Vorzugsweise ist dieser Doppelsteg an bezüglich der Außenfläche der Gittermatte zurückgesetzten Eindrückungen der zum Doppelsteg rechtwinklig verlaufenden Gitterstäbe befestigt.

Durch den Doppelsteg kann in einfacher Weise ein Schlagdübel mit Schraube gesteckt und an der Wand, am Boden oder an der Decke des Gebäudes befestigt werden, um der Gittermatte einen festen Halt zu verleihen.

Es ist günstig, wenn die Rohrleitung an der Innenfläche der Gittermatte befestigt ist, so daß diese eine Putzarmierung bildet, beispielsweise an einer Gebäudewand, wobei die Rohrleitung als Abstandshalter zu der Wand dient.

Die Befestigung der Rohrleitung an der Innenfläche der Gittermatte, in welche die Eindrückungen der zum Doppelsteg quer verlaufenden Gitterstäbe hineinragen, hat den Vorzug, daß die Montageeinheit nur eine äußerst geringe Stärke aufweist, so daß die anschließend aufzubringende Putzschicht wesentlich dünner als bisher notwendig sein kann.

Vorteilhafte Weiterbildungen ergeben sich aus den Patentansprüchen und aus der folgenden Beschreibung von Ausführungsbeispielen, die in der Zeichnung dargestellt sind. Es zeigen:
Figur 1 eine perspektivische Darstellung einer vorgefertigten Montageeinheit,
Figur 1a eine vergrößerte Detaildarstellung,
Figur 1b eine vergrößerte Detaildarstellung eines Endes der Rohrleitung,
Figur 2 einen Ausschnitt aus einer Gittermatte im Bereich eines Doppelsteges,
Figur 3 eine Draufsicht auf die Ausführungsform der Figur 2,
Figur 4 die perspektivische Darstellung einer Ausführungsform mit zwei leporelloartig miteinander verbundenen Tragelementen,
Figur 4a in vergrößertem Maßstab eine Detaildarstellung im Bereich eines Gelenkes,
Figur 5 einen Horizontalschnitt durch das Gelenk der Figur 4a,
Figur 6 die perspektivische Ansicht einer abgeänderten Gelenkverbindung,
Figur 7 die Gelenkverbindung der Figur 6 mit abgetrenntem Überlappungsbereich,
Figur 8 eine Variante der Figur 4 mit insgesamt drei harmonikaartig miteinander verbundenen Tragelementen und
Figur 9 eine Variante der Figur 8 mit insgesamt vier gelenkig miteinander verbundenen Tragelementen.

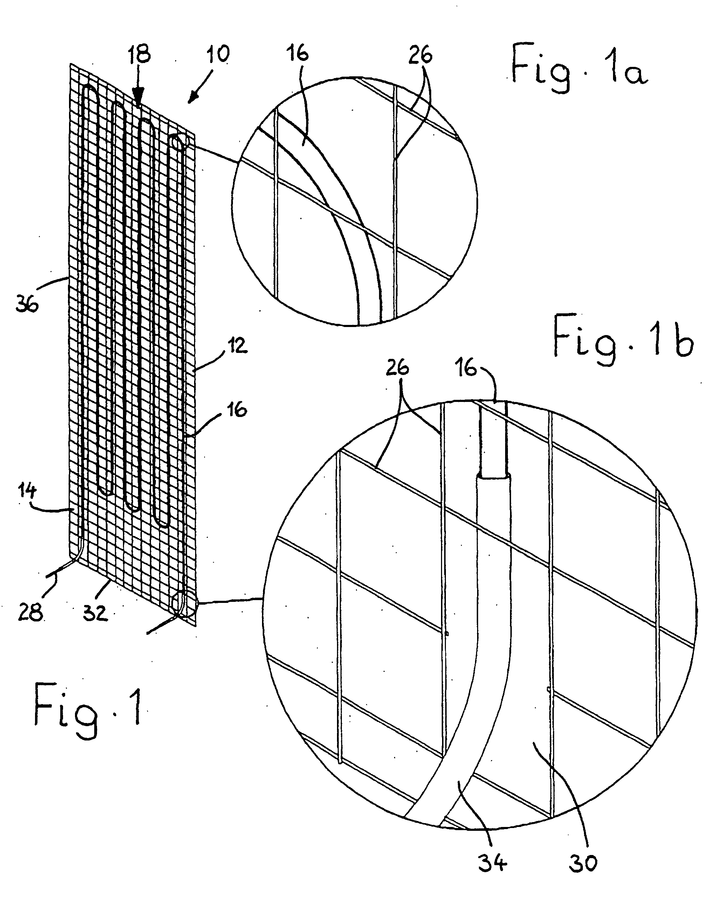

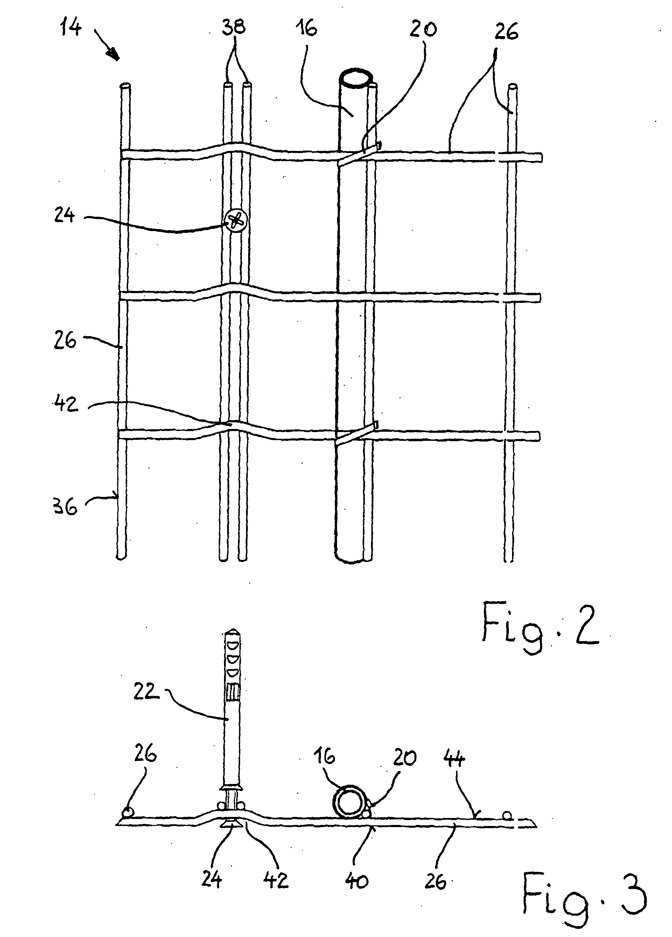

Figur 1 zeigt eine Ausführungsform der Erfindung, bei der die vorgefertigte Montageeinheit 10 aus einem rechteckigen, plattenförmigen Tragelement 12 besteht, das als eine Gittermatte 14 ausgebildet ist. Auf der Gittermatte 14 ist eine Rohrleitung 16 in Form eines schlangenförmigen Registers 18 befestigt, beispielsweise mit Hilfe von herkömmlichen Schlauchbindern 20 (vgl. Figur 2).

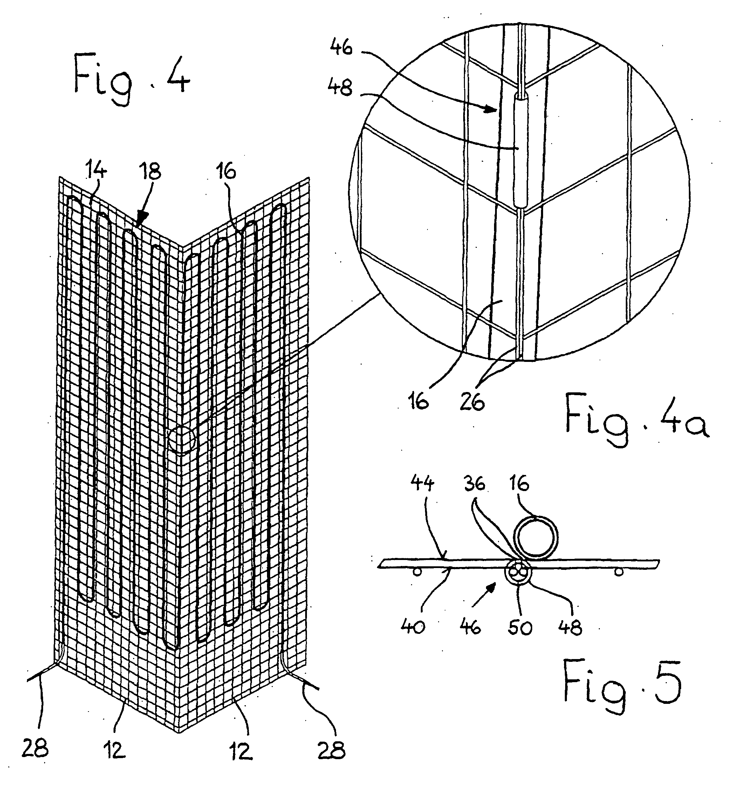

Die Montageeinheit 10 kann in der in Figur 1 gezeigten Vertikalstellung an einer Wand eines Gebäudes befestigt werden, beispielsweise mit Hilfe von Schlagdübeln 22 und Schrauben 24 (vgl. Figur 3). Selbstverständlich ist es auch möglich, die Montageeinheit 10 nicht hochkant, sondern um 90° gekippt quer auszurichten oder am Boden eines Raumes oder an dessen Decke zu verlegen.

Die Gittermatte 14 besteht aus rechtwinklig miteinander verbundenen Gitterstäben 26 aus Kunststoff oder Metall, wobei im Falle von Gitterstäben 26 aus Metall diese eine korrosionsfeste Beschichtung aufweisen. Damit wird verhindert, daß nach dem Aufbringen einer Putzschicht später Rostflecken entstehen.

Am Beispiel der Figur 1 ist die Rohrleitung 16 an der Innenfläche 44 (Fig. 3) der Gittermatte 14 befestigt, welche zur Wand weist, an der die Montageeinheit 10 angebracht werden soll. Die Gittermatte 14 ist damit nicht nur Träger für die Rohrleitung 16, sondern dient gleichzeitig als Putzarmierung, welche Putzrisse verhindert, die aufgrund der Längenausdehnung der von einem Heizmedium durchströmten Rohrleitung 16 mit nicht armiertem Putz auftreten können. Die Rohrleitung 16 dient dabei als Abstandshalter der Putzarmierung zur Wand.

Im unteren Bereich der Figur 1 sowie in Figur 1b ist gezeigt, daß die beiden Enden 28 der Rohrleitung 16 durch jeweils ein Fenster 30 der Gittermatte 14 bogenförmig nach außen geführt sind. Da die beiden Enden 28 an einer gemeinsamen Außenkante - hier der Unterkante 32 - des Tragelementes 12 liegen, ist eine problemlose Verbindung mit der nicht gezeigten Vorlaufleitung und Rücklaufleitung des Heiz- bzw. Kühlsystems möglich. Während der Lagerung und des Transports der Montageeinheit 10 können die beiden nach außen abgewinkelten Enden 28 der Rohrleitung 16 um etwa 90° gegen die Gittermatte 14 geschwenkt werden, was aufgrund der Elastizität der Rohrleitung 14, die vorzugsweise aus Kunststoff besteht, ohne weiteres möglich ist.

Figur 1b zeigt, daß auf die Enden 28 der Rohrleitung 16 ein rohrförmiger Schutzmantel 34 aufgesteckt ist, der eine Verstärkung bildet und die über die Gittermatte 14 vorstehenden Enden 28 bei der Montage und nachfolgenden Bauarbeiten schützt.

In Figur 1 ist schließlich zu erkennen, daß die schlangenförmige Verlegung der Rohrleitung 16 im Register 18 nicht die gesamte Höhe des Tragelementes 12 einnimmt, so daß dieses bei Bedarf gekürzt werden kann, etwa bei niedrigeren Räumen. In diesem Fall kann das Fenster 30 an einer anderen Stelle ausgeschnitten werden, um dann das Ende 28 der Rohrleitung 16 nach außen zu führen.

Wenn die Rohrleitung 16 auf der Außenfläche 40 der Gittermatte 14 befestigt ist, erübrigen sich selbstverständlich die Fenster 30.

Die Figuren 2 und 3 zeigen, daß die Gittermatte 14 im Bereich der beiden zueinander parallelen Außenkanten 36 (vgl. hierzu auch Figur 1) einen zur Außenkante 36 parallelen Doppelsteg 38 hat, dessen lichte Weite etwa dem Durchmesser eines Schlagdübels 22 entspricht. Der Doppelsteg 38 ist an bezüglich der Außenfläche 40 der Gittermatte 14 zurückgesetzten Eindrückungen 42 der zum Doppelsteg 38 rechtwinklig verlaufenden Gitterstäbe 26 befestigt. Die Eindrückungen 42 nehmen im an der Wand, dem Boden oder der Decke befestigten Zustand der Montageeinheit 10 die Köpfe der Schrauben 24 auf, so daß diese nicht über die Außenfläche 40 vorstehen können. Dadurch wird die Putzarbeit wesentlich erleichtert.

Da gemäß Figur 3 die Rohrleitung 16 an der Innenfläche 44 der Gittermatte 14 befestigt ist, in welche die Eindrückungen 42 hineinragen, ist die Gesamtdicke der Montageeinheit 10 sehr gering, so daß die erforderliche Putzdicke verhältnismäßig dünn sein kann. Figur 3 macht deutlich, daß die an der Innenfläche 44 der Gittermatte 14 angebrachte Rohrleitung 16 gleichzeitig als Abstandshalter zwischen Putzarmierung und Wand dient.

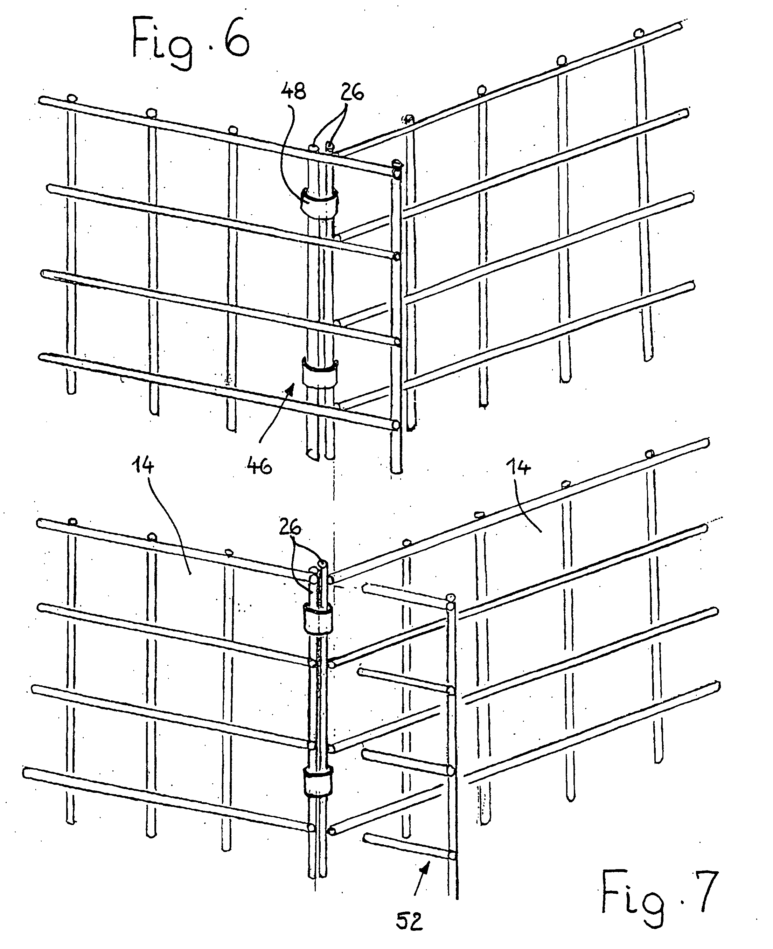

Die Figuren 4 und 5 zeigen eine Ausführungsform der Erfindung, bei der zwei Tragelemente 12 über Gelenke 46 leporelloartig miteinander verbunden sind. Die Gelenke 46 bestehen jeweils aus Rohrstücken 48, die aus Blech hergestellt sind und einen Längsschlitz 50 aufweisen, so daß sie über zwei aneinanderstoßende Gitterstäbe 26 der miteinander zu verbindenden Gittermatten 14 gelegt werden können, wonach sie radial spielfrei auf den beiden Gitterstäben 26 verpreßt werden. Die Höhe der Rohrstücke 48 entspricht dem Maschenabstand zwischen zwei quer verlaufenden Gitterstäben 26, so daß sich die miteinander verbundenen Gittermatten 14 nicht gegeneinander verschieben können.

Wie Figur 4 zeigt, erstreckt sich die Rohrleitung 16 als ein zusammenhängendes Register 18 über beide Tragelemente 12, so daß die beiden Enden 28 der Rohrleitung 16 aus beiden gelenkig miteinander verbundenen Gittermatten 14 heraustreten.

Im Bereich der durch die Gelenke 46 miteinander verbundenen, parallelen Außenkanten 36 der beiden Tragelemente 12 erstreckt sich ein längs zu den Außenkanten 36 verlaufender Abschnitt der Rohrleitung 16. Dieser im dargestellten Ausführungsbeispiel vertikale Abschnitt der Rohrleitung 16 ist Teil des Drehgelenkes zwischen den beiden Tragelementen 12 und unterliegt beim Zusammenfalten der beiden Tragelemente 12 einer Verwindung, die sich über die gesamte Länge dieses Abschnittes erstreckt und vom Material der Rohrleitung 16 ohne weiteres aufgenommen wird.

Im Ausführungsbeispiel der Figuren 4 und 5 stoßen die beiden gelenkig miteinander verbundenen Gittermatten 14 mit ihren Außenkanten 36 stumpf aneinander (vgl. Figur 5). Auf diese Weise entsteht im Gelenkbereich ein wenn auch nur sehr schmaler Spalt, der sich über die gesamte Höhe der Tragelemente 12 erstreckt. Um einen derartigen Spalt zwischen den beiden Tragelementen 12 zu vermeiden, ist nach dem Ausführungsbeispiel der Figur 6 vorgesehen, im Bereich der Gelenke 46 zwischen zwei Tragelementen 12 eine Gittermatte 14 so auszubilden, daß sie die benachbarte Gittermatte 14 mit einem Endabschnitt 52 überlappt. Damit kann eine durchgehend von Gittermatten 14 abgedeckte, ebene Fläche ohne Längsspalt hergestellt werden, die Rißbildungen im Putz vermeidet.

Wenn gemäß Figur 7 die beiden Gittermatten 14 nicht - wie zu Figur 6 ausgeführt - eine durchgehend ebene Fläche bedecken sollen, sondern beispielsweise einen Eckbereich zu überbrücken haben, kann der überlappende Endabschnitt 52 der in Figur 7 linken Gittermatte 14 abgetrennt werden, beispielsweise mit Hilfe einer geeigneten Zange, so daß der Bereich der Gelenke 46 bis in den Eckbereich hineinragt.

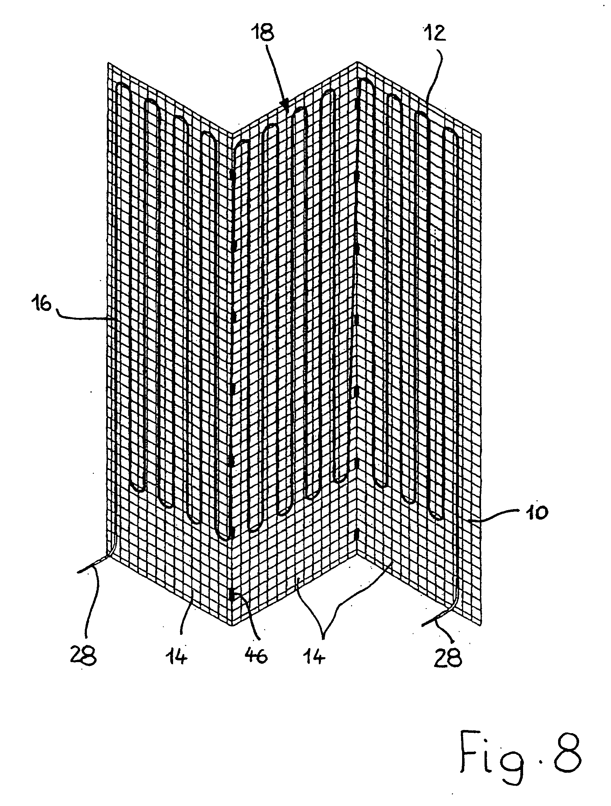

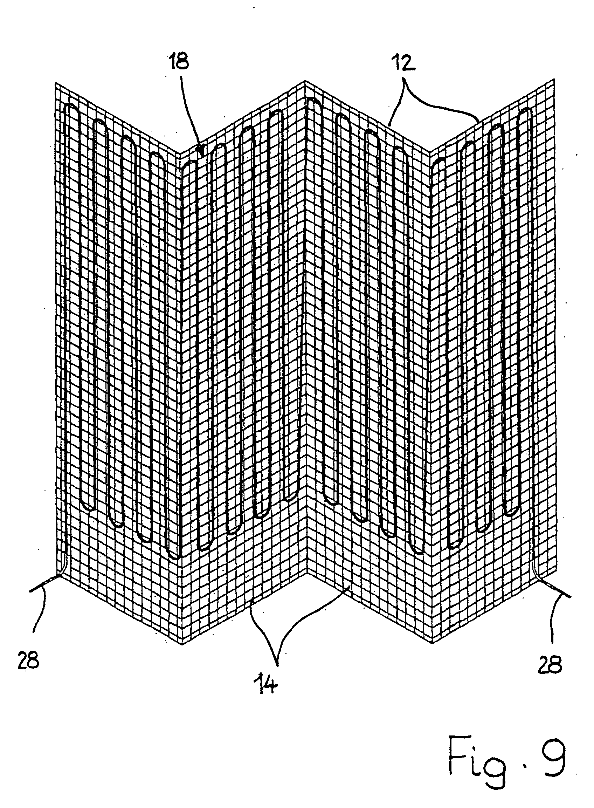

Die Ausführungsbeispiele der Figuren 8 und 9 zeigen zwei weitere Möglichkeiten, bei denen in Erweiterung des Beispiels der Figur 4 drei bzw. vier Tragelemente 12, die als Gittermatten 14 ausgebildet sind, leporelloartig miteinander verbunden sind. In beiden Fällen erstreckt sich die Rohrleitung 16 als ein zusammenhängendes Register 18 über alle Tragelemente 12.

## Patentansprüche

1. Vorrichtung zur Wärmeübertragung mit wenigstens einer von einem Heiz- oder Kühlmedium durchströmten Rohrleitung (16), die als vorzugsweise schlangenförmiges Register (18) ausgebildet und zur Bildung einer vorgefertigten Montageeinheit (10) auf einem plattenförmigen Tragelement (12) befestigt ist, **dadurch gekennzeichnet, daß** mehrere Tragelemente (12) über Gelenke (46) harmonika- oder leporelloartig miteinander verbunden sind.

2. Vorrichtung nach Anspruch 1, **dadurch gekennzeichnet, daß** sich die Rohrleitung (16) als ein zusammenhängendes Register (18) über mehrere Tragelemente (12) erstreckt.

3. Vorrichtung nach Anspruch 2, **dadurch gekennzeichnet, daß** im Bereich der durch die Gelenke (46) miteinander verbundenen, parallelen Außenkanten (36) zweier Tragelemente (12) ein längs der Außenkanten (36) verlaufender Abschnitt der Rohrleitung (16) angeordnet ist.

4. Vorrichtung nach einem der vorhergehenden Ansprüche, **dadurch gekennzeichnet, daß** die plattenförmigen Tragelemente (12) aus Gittermatten (14) bestehen.

5. Vorrichtung nach Anspruch 4, **dadurch gekennzeichnet, daß** die Gitterstäbe (26) eine korrosionsfeste Beschichtung aufweisen.

6. Vorrichtung nach Anspruch 4 oder 5, **dadurch gekennzeichnet, daß** jede Gittermatte (14) im Bereich von zwei zueinander parallelen Außenkanten (36) jeweils einen zur Außenkante (36) parallelen Doppelsteg (38) für die Aufnahme von Befestigungselementen (24) hat.

7. Vorrichtung nach Anspruch 6, **dadurch gekennzeichnet, daß** der Doppelsteg (38) an bezüglich der Außenfläche (40) der Gittermatte (14) zurückgesetzten Eindrückungen (42) der zum Doppelsteg (38) rechtwinklig verlaufenden Gitterstäbe (26) befestigt ist.

8. Vorrichtung nach Anspruch 7, **dadurch gekennzeichnet, daß** die Rohrleitung (16) an der Innenfläche (44) der Gittermatte (14) befestigt ist, derart, daß die Gittermatte (14) eine Putzarmierung bildet, bei der die Rohrleitung (16) als Abstandshalter dient.

9. Vorrichtung nach einem der vorhergehenden Ansprüche, **dadurch gekennzeichnet, daß** die Rohrleitung (16) mittels Schlauchbindern (20) oder dergleichen an dem Tragelement (12) befestigt ist.

10. Vorrichtung nach einem der vorhergehenden Ansprüche, **dadurch gekennzeichnet, daß** die beiden als Anschluß dienenden Enden (28) der Rohrleitung (16) ein- und auschwenkbar an einer gemeinsamen Außenkante (32) des Tragelementes (12) liegen.

11. Vorrichtung nach Anspruch 10, **dadurch gekennzeichnet, daß** die Enden (28) der Rohrleitung (16) durch Fenster (30) des Tragelementes (12) von dessen Innenfläche (44) nach außen geführt sind.

12. Vorrichtung nach Anspruch 10 oder 11, **dadurch gekennzeichnet, daß** die Enden (28) der Rohrleitung (16) durch jeweils einen rohrförmigen Schutzmantel (34) verstärkt sind.

13. Vorrichtung nach einem der Ansprüche 4 bis 12, **dadurch gekennzeichnet, daß** die Gelenke (46) aus zwei aneinanderstoßende Gitterstäbe (26) spielfrei aufnehmenden Rohrstücken (48) bestehen.

14. Vorrichtung nach Anspruch 13, **dadurch gekennzeichnet, daß** die Länge der Rohrstücke (48) dem Maschenabstand der quer verlaufenden Gitterstäbe (26) entspricht.

15. Vorrichtung nach einem der Ansprüche 4 bis 14, **dadurch gekennzeichnet, daß** im Bereich der Gelenke (46) zwischen zwei Tragelementen (12) eine Gittermatte (14) die benachbarte Gittermatte (14) mit einem Endabschnitt (52) überlappt.

16. Vorrichtung nach Anspruch 15, **dadurch gekennzeichnet, daß** der überlappende Endabschnitt (52) abtrennbar ist.

17. Vorrichtung nach einem der vorhergehenden Ansprüche, **dadurch gekennzeichnet, daß** das Register (18) nur eine Teilfläche des Tragelementes (12) abdeckt und daß die verbleibende Restfläche bei einer notwendigen Verkürzung des Tragelementes (12) abtrennbar ist.

## Claims

1. A heat transfer device comprising at least one pipe (16) through which a heating or cooling medium flows and which is formed as a preferably winding register (18) and is fixed to a plate-type support (12) to form a prefabricated assembly unit (10), **characterised in that** a plurality of supports (12) are connected to one another by joints (46) in a concertina or fanfold arrangement.

2. A device according to claim 1, **characterised in that** the pipe (16) extends as a continuous register (18) over a plurality of supports (12).

3. A device according to claim 2, **characterised in that**, in the region of the parallel outer edges (36) of two supports (12), the outer edges (36) being connected to one another by the joints (46), a portion of the pipe (16) is arranged so as to extend along the outer edges (36).

4. A device according to any one of the preceding claims, **characterised in that** the plate-type supports (12) comprise grid mats (14).

5. A device according to claim 4, **characterised in that** the grid bars (26) have a corrosion-resistant coating.

6. A device according to claim 4 or 5, **characterised in that** each grid mat (14) has, in the region of two mutually parallel outer edges (36), a double bar (38) extending parallel to the outer edge (36) and intended to receive fixing members (24).

7. A device according to claim 6, **characterised in that** the double bar (38) is fixed to indentations (42) in the grid bars (26) extending at right angles to the double bar (38), the indentations (42) being set back in relation to the outer surface (40) of the grid mat (14).

8. A device according to claim 7, **characterised in that** the pipe (16) is fixed to the inner surface (44) of the grid mat (14) in such a way that the grid mat (14) forms a plaster reinforcement in which the pipe (16) acts as a spacer.

9. A device according to any one of the preceding claims, **characterised in that** the pipe (16) is fixed to the support (12) by means of hose clips (20) or the like.

10. A device according to any one of the preceding claims, **characterised in that** the two ends (28) of the pipe (16), which serve as connectors, lie on a common outer edge (32) of the support (12) and are pivotable in and out.

11. A device according to claim 10, **characterised in that** the ends (28) of the pipe (16) are guided outwards from the inner surface (44) of the support (12) through windows (30) provided therein.

12. A device according to claim 10 or 11, **characterised in that** the ends (28) of the pipe (16) are each reinforced by a tubular protective casing (34).

13. A device according to any one of claims 4 to 12, **characterised in that** the joints (46) comprise tubular parts (48) receiving two adjoining grid bars (26) in a manner free of play.

14. A device according to claim 13, **characterised in that** the length of the tubular parts (48) corresponds to the mesh distance between the transversely extending grid bars (26).

15. A device according to any one of claims 4 to 14, **characterised in that**, in the region of the joints (46) between two supports (12), an end portion (52) of a grid mat (14) overlaps the adjacent grid mat (14).

16. A device according to claim 15, **characterised in that** the overlapping end portion (52) is removable.

17. A device according to any one of the preceding claims, **characterised in that** the register (18) only covers part of the surface of the support (12) and **in that** the remainder of the surface is removable should it be necessary to shorten the support (12).

## Revendications

1. Dispositif pour transfert de chaleur, ayant au moins une tuyauterie (16) traversée par un fluide chauffant ou frigorigène, ladite tuyauterie étant conçue comme une batterie (18) de préférence en serpentin, et étant fixée sur un élément de support (12) en forme de plaque, afin de former une unité montée (10) préfabriquée, **caractérisé en ce que** plusieurs éléments de support (12) sont reliés entre eux, en accordéon ou en paravent, par des articulations (46).

2. Dispositif selon la revendication 1, **caractérisé en ce que** la tuyauterie (16) s'étend sur plusieurs éléments de support (12) pour former une batterie continue (18).

3. Dispositif selon la revendication 2, **caractérisé en ce que**, dans la zone des bords extérieurs parallèles (36) - de deux éléments de support (12) - reliés entre eux par les articulations (46), est disposée une partie de la tuyauterie (16) courant le long des bords extérieurs (36).

4. Dispositif selon l'une des revendications précédentes, **caractérisé en ce que** les éléments de support (12) en forme de plaques sont constitués de treillis (14).

5. Dispositif selon la revendication 4, **caractérisé en ce que** les barreaux de treillis (26) présentent un revêtement anticorrosion.

6. Dispositif selon la revendication 4 ou 5, **caractérisé en ce que**, dans la zone entre deux bords extérieurs (36) parallèles entre eux, chaque treillis (14) présente respectivement une double entretoise (38) parallèle au bord extérieur (36) et destinée à recevoir des éléments de fixation (24).

7. Dispositif selon la revendication 6, **caractérisé en ce que** la double entretoise (38) est fixée sur des enfoncements (42) des barreaux de treillis (26) perpendiculaires à l'entretoise (38), lesdits enfoncements étant en retrait par rapport à la face extérieure (40) du treillis (14).

8. Dispositif selon la revendication 7, **caractérisé en ce que** la tuyauterie (16) est fixée sur la face intérieure (44) du treillis (14), de telle sorte que le treillis (14) constitue une armature d'enduit, dans laquelle la tuyauterie (16) sert d'écarteur.

9. Dispositif selon l'une des revendications précédentes, **caractérisé en ce que** la tuyauterie (16) est fixée à l'élément de support (12) par des colliers de serrage (20) ou autres.

10. Dispositif selon l'une des revendications précédentes, **caractérisé en ce que** les deux extrémités (28) de la tuyauterie (16) qui servent de raccord se trouvent sur un bord extérieur commun (32) de l'élément de support (12) et peuvent être orientées vers l'intérieur et vers l'extérieur.

11. Dispositif selon la revendication 10, **caractérisé en ce que** les extrémités (28) de la tuyauterie (16) sont guidées à travers des fenêtres (30) de l'élément de support (12), de sa face intérieure (44) vers l'extérieur.

12. Dispositif selon la revendication 10 ou 11, **caractérisé en ce que** les extrémités (28) de la tuyauterie (16) sont renforcées chacune par une gaine protectrice tubulaire (34) respective.

13. Dispositif selon l'une des revendications 4 à 12, **caractérisé en ce que** les articulations (46) sont constituées de pièces tubulaires (48) qui serrent sans jeu deux barreaux de treillis (26) contigus.

14. Dispositif selon la revendication 13, **caractérisé en ce que** la longueur des pièces tubulaires (48) correspond à l'écartement des barreaux de treillis (26) transversaux.

15. Dispositif selon l'une des revendications 4 à 14, **caractérisé en ce que**, dans la zone des articulations (46) entre deux éléments de support (12), un treillis (14) chevauche le treillis voisin (14) avec une partie d'extrémité (52).

16. Dispositif selon la revendication 15, **caractérisé en ce que** la partie d'extrémité (52) qui chevauche le treillis voisin peut être tranchée.

17. Dispositif selon l'une des revendications précédentes, **caractérisé en ce que** la batterie (18) ne recouvre qu'une surface partielle de l'élément de support (12) et que la surface restante peut être tranchée si l'on a besoin de raccourcir l'élément de support (12).
